# DEMANDE DE BREVET EUROPEEN

(11) **EP 0 660 639 A1**
(43) Date de publication de la demande: **28.06.1995**
(21) Numéro de dépôt: 94402958.6
(22) Date de dépôt: 20.12.1994
(51) Int. Cl.: H04R 1/08, B60R 11/02

(54) **Système de fixation pour microphone**

(30) Priorité: 23.12.1993 FR 9315559
(71) Demandeur: ALCATEL MOBILE COMMUNICATION FRANCE, 75008 Paris (FR)
(72) Inventeur: Auvray, Eric, F-41400 Saint Georges sur Cher (FR)
(74) Mandataire: Pothet, Jean Rémy Emile Ludovic

(57) **Abrégé**

La présente invention concerne un système de fixation pour microphone (13), ce système (10) comprenant un élément de support (12) et un corps partiellement sphérique (11) capable d'effectuer un mouvement basculant à la manière d'une rotule par rapport à l'élément de support (12) dont il est rendu solidaire, le microphone (13) étant solidaire du corps partiellement sphérique (11) de sorte que le microphone (13) est orientable par action sur le corps (11).

## Description

La présente invention concerne un système de fixation pour microphone. Elle concerne plus particulièrement un système pour la fixation du microphone d'un radiotéléphone destiné à être utilisé à l'intérieur d'un véhicule mobile tel qu'une automobile.

On a conçu des systèmes spécifiques d'installation des radiotéléphones pour leur utilisation dans des automobiles, notamment par les conducteurs. Ces systèmes doivent répondre à un certain nombre de normes de sécurité. Notamment, on cherche à réduire au maximum les raisons pour lesquelles le conducteur doit avoir à éloigner les mains de son volant.

Pour cela, les systèmes pour l'installation de radiotéléphones dans les automobiles comportent un haut-parleur et un microphone installés dans l'habitacle, de sorte que l'utilisateur peut écouter et parler à son correspondant sans avoir à tenir le combiné en mains. Ces systèmes sont appelés "mains libres".

Une caractéristique importante des microphones utilisés dans les systèmes mains libres pour radiotéléphones est qu'ils sont très performants. Par conséquent, la qualité du son qu'ils transmettent dépend fortement de la direction de leur axe principal par rapport à la direction dans laquelle parle l'utilisateur. On dit que ces microphones sont directionnels. Ainsi, pour un bon niveau de performances et une bonne qualité d'écoute pour le destinataire de l'appel, il est nécessaire d'orienter précisément le microphone. Cette orientation dépend de la physionomie de chaque utilisateur, et notamment de sa taille. Il est donc indispensable que le microphone soit orientable.

A cet effet, il existe actuellement deux systèmes connus pour fixer un microphone à l'intérieur de l'habitacle d'une automobile.

Un premier de ces systèmes consiste à fixer le microphone sur une pince (ou "clips") qui peut être rendue solidaire du tableau de bord du véhicule sans toutefois y être définitivement fixée. En détachant la pince du tableau de bord et en la disposant de manière adaptée, l'utilisateur peut orienter comme il le souhaite le microphone.

Selon un deuxième système de fixation connu, le microphone est monté sur un support présentant une face revêtue d'un matériau capable d'adhérer sur les revêtements présents à l'intérieur de l'habitacle du véhicule et susceptibles de recevoir le microphone. Ce matériau est tel qu'il présente une adhérence plus importante au support qu'aux revêtements précités. Ainsi, le microphone peut être orienté à souhait en "décollant" le système et en le "collant" dans une position adaptée.

Les systèmes de fixation connus ne sont toutefois pas satisfaisants.

Les manipulations nécessaires pour déplacer et orienter le microphone sont dangereuses à effectuer lorsque le conducteur est en train de conduire.

En effet, la force à exercer pour manipuler ces systèmes est relativement importante, ce qui peut entraîner, par réaction, de brusques mouvements de la part du conducteur, et par voie de conséquence des changements de direction involontaires de l'automobile.

Le but de la présente invention est donc de mettre au point un système de fixation pour microphone de manipulation moins dangereuse que celle des systèmes connus par le conducteur d'un véhicule mobile.

La présente invention propose à cet effet un système de fixation pour microphone, ledit système comprenant un élément de support,
caractérisé en ce qu'il comprend un corps partiellement sphérique capable d'effectuer un mouvement basculant à la manière d'une rotule par rapport audit élément de support dont il est rendu solidaire, ledit microphone étant solidaire dudit corps partiellement sphérique de sorte que ledit microphone est orientable par action sur ledit corps.

Ainsi, lorsque le système selon l'invention est installé dans un véhicule mobile, il suffit, pour orienter le microphone dans la direction adaptée, de faire tourner le corps partiellement sphérique dans son support, ce qui peut être fait aisément d'une main en exerçant une force relativement faible, et donc sans entraîner de mouvements brusques risquant d'avoir pour conséquence des changements de direction involontaires du véhicule.

Avantageusement, le microphone peut être directement intégré dans le corps partiellement sphérique. Ainsi, l'encombrement du système est moindre.

La forme du logement du microphone dans le corps partiellement sphérique est alors adaptée pour permettre un fonctionnement optimal du microphone, et notamment une transmission optimale du son.

D'autres caractéristiques et avantages de la présente invention apparaîtront dans la description suivante de modes de mise en oeuvre particuliers de la présente invention, donnés à titre d'exemples illustratifs et nullement limitatifs.

Dans les figures suivantes :
- la figure 1 est une vue en perspective d'un premier système de fixation selon l'invention destiné à être installé à un emplacement quelconque dans l'habitacle d'une automobile,
- la figure 2 est une vue en coupe de la figure 1,
- la figure 3 montre schématiquement comment le système de fixation des figures 1 et 2 peut être installé dans l'habitacle d'une automobile,
- la figure 4 est une vue en perspective d'un deuxième système de fixation selon l'invention destiné à être monté à demeure dans le plafonnier d'un habitacle de véhicule,
- la figure 5 est une vue en coupe de la figure 4,
- la figure 6 montre schématiquement comment le système de fixation des figures 4 et 5 peut être installé dans l'habitacle d'une automobile,
- les figures 7 à 9 montrent des variantes d'intégration possibles du microphone dans le corps partiellement sphérique d'un système selon l'invention.

Dans toutes ces figures, les éléments communs portent les mêmes numéros de référence.

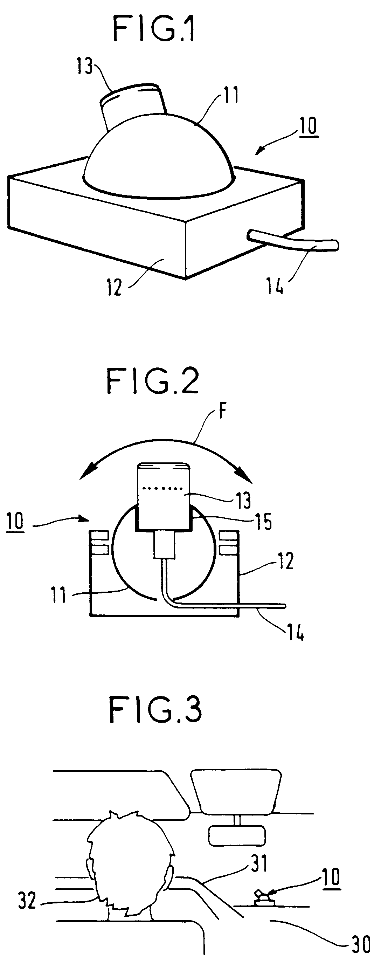

On voit en perspective en figure 1 un premier système de fixation 10 selon l'invention. Le système 10 comprend un corps partiellement sphérique 11 monté dans un élément de support 12 sensiblement parallélépipédique, et un microphone 13 de forme cylindrique en partie intégré dans le corps 11 et dépassant en partie au-delà du contour de la sphère délimitant le corps 11.

Le corps partiellement sphérique 11 peut effectuer des mouvements dits "basculants", à la manière d'une rotule, par rapport à l'élément de support 12.

Un conducteur électrique de raccordement 14 relie le microphone 13 aux autres éléments d'un dispositif (non représenté) auquel il appartient, comme par exemple un radiotéléphone destiné à être utilisé dans une automobile au moyen d'un système "mains libres", un magnétophone à déclenchement vocal, etc...

Le système 10 n'est pas destiné à être fixé à demeure. Ainsi, comme le montre la figure 3, il peut être posé dans l'habitacle 30 d'une automobile, par exemple sur le tableau de bord 31 au voisinage du conducteur 32 de l'automobile.

Selon l'invention, pour orienter le microphone 13 dans la direction souhaitée, il suffit pour le conducteur 32 de faire tourner le corps 11 dans son support 12. Le corps 11 étant presque entièrement sphérique (il n'est pas entièrement sphérique puisqu'il comporte un logement adapté 15 pour l'intégration du microphone 13), il se comporte comme une rotule, de sorte qu'il est très facile de le faire basculer à l'intérieur de l'élément de support 12, par exemple selon la flèche F (voir figure 2). Bien entendu, la flèche F ne représente qu'un exemple d'orientation possible ; il est évident que le microphone 13 peut occuper une infinité de positions différentes, puisque la rotule constituée par l'élément de support 12 et le corps 11 permet de l'orienter de tous les côtés.

L'utilisation du système de fixation 10 selon l'invention pour l'installation d'un microphone appartenant à un radiotéléphone fonctionnant en "mains libres" dans une automobile est donc particulièrement avantageuse. En effet, le système selon l'invention permet d'orienter très facilement le microphone, et donc de toujours l'utiliser dans les conditions optimales en termes de performances phoniques en fonction de la taille et de la position du locuteur, tout en rendant la manipulation du microphone aisée et donc moins dangereuse lorsqu'elle est effectuée par le conducteur du véhicule que celle des systèmes de fixation de l'art antérieur.

Le fait que le système 10 selon l'invention ne soit pas fixé à demeure permet l'utilisation du microphone 13 non seulement par le conducteur et par le passager avant, mais également par tout autre passager à l'intérieur de l'automobile.

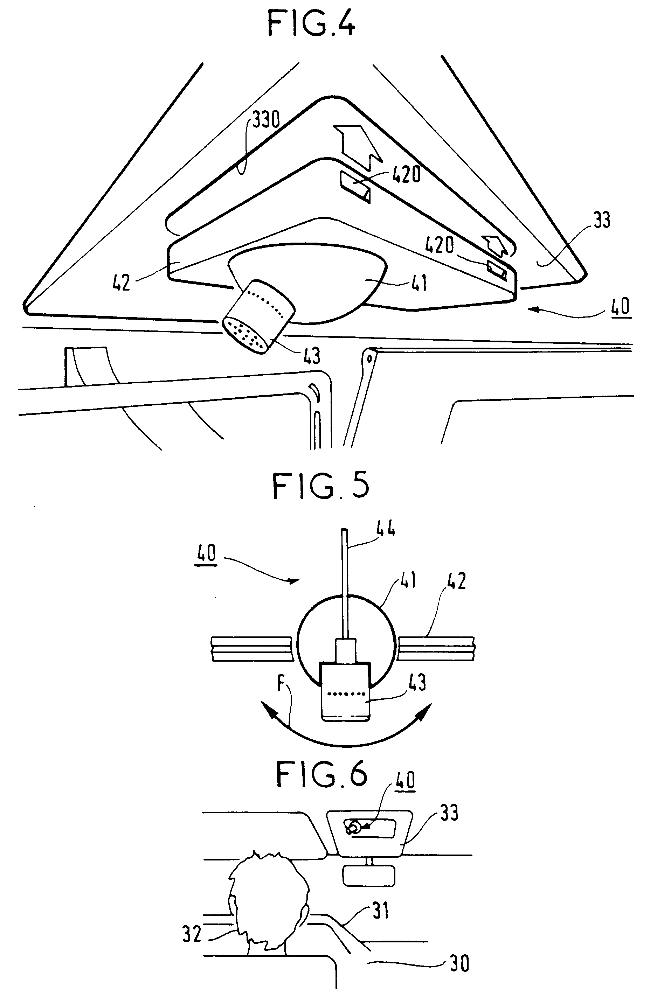

On voit en perspective en figure 4 un deuxième système de fixation 40 selon l'invention. Le système 40 comprend les mêmes éléments principaux que le système 40 (voir également la figure 5), c'est-à-dire un corps partiellement sphérique 41 monté dans un élément de support 42 sensiblement parallélépipédique, et un microphone 43 de forme cylindrique en partie intégré dans le corps 41 et dépassant en partie au-delà du contour de la sphère délimitant le corps 41.

Le corps partiellement sphérique 41 peut également effectuer des mouvements "basculants", à la manière d'une rotule, par rapport à l'élément de support 42.

Un conducteur électrique de raccordement 44 relie le microphone 43 aux autres éléments d'un dispositif (non représenté) auquel il appartient, comme par exemple un radiotéléphone.

Le système 40 est destiné à être fixé dans le plafonnier 33 de l'habitacle 30 (voir figure 6). A cet effet, l'élément de support 42 présente par exemple des ouvertures 420 destinées à coopérer avec des ergots (non représentés) dépassant au-delà des parois du logement 330 pratiqué dans le plafonnier 33 pour recevoir le système 40, de sorte que ce dernier est fixé par enclipsage dans le plafonnier 33.

De préférence, le système de fixation 40 sera installé dans le plafonnier 33 à l'avant et au centre de l'habitacle, pour permettre une utilisation du microphone 43 par le conducteur et le passager avant. Il peut avantageusement être intégré au plafonnier 33 par le constructeur de l'automobile lors de la fabrication de cette dernière, en même temps qu'une lampe de lecture et éventuellement qu'un récepteur de commande à infrarouges qu'il est bien connu d'installer à cet endroit dans l'habitacle.

Le système 40 fonctionne de manière identique au système 10 pour l'orientation du microphone 43, et présente les mêmes avantages.

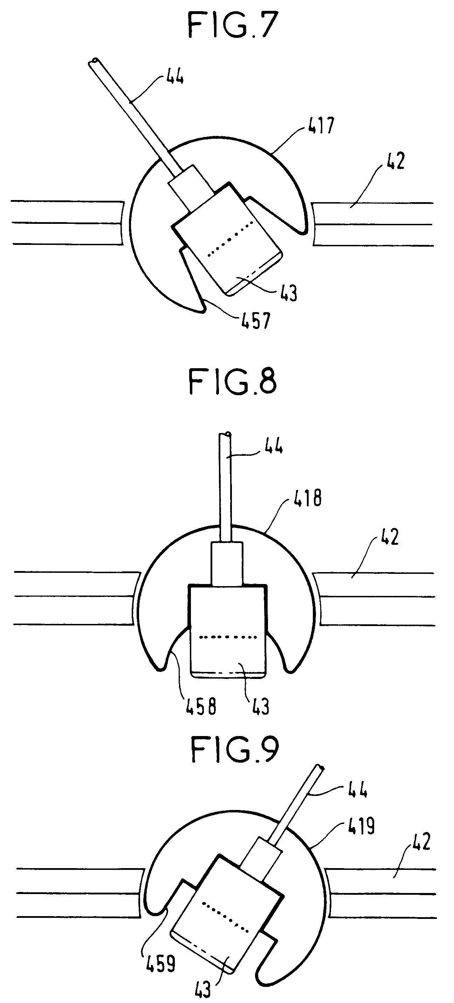

On a représenté aux figures 7 à 9 trois variantes possibles pour l'intégration du microphone 43 dans le corps 41 par exemple. Ces trois variantes du corps 41 sont référencées respectivement 417, 418 et 419. Bien évidemment, ces variantes s'adaptent également au corps 11 du système 10 selon l'invention, et à tout autre système conforme à la présente invention.

Afin de diminuer l'encombrement de l'ensemble du système, et pour répondre à certaines normes de sécurité qui exigent qu'aucun élément présentant des arêtes saillantes ne dépasse à proximité des passagers, il peut être souhaitable de plus intégrer le microphone 43 à l'intérieur du corps 41, de sorte que le microphone 43 ne dépasse pas au-delà des limites de la sphère délimitant le corps 41.

Les trois formes de logements 457, 458 et 459 représentées respectivement aux figures 7 à 9 illustrent des mises en oeuvre possibles conformes à l'exigence précédente.

De manière bien connue de l'homme de l'art spécialisé dans le domaine des microphones, le logement du microphone 43 dans le corps 41 doit être tel qu'une partie prédéterminée du microphone 43 se trouve à l'extérieur du corps 41, ceci pour obtenir des performances phoniques optimales. Aux figures 7 à 9, la partie qui doit émerger est celle qui se trouve au-delà d'une ligne discontinue L représentée sur le microphone 43. Bien entendu, ceci n'est qu'un exemple, et l'homme de l'art adaptera le logement à l'intérieur du corps partiellement sphérique à chaque forme de microphone.

Le microphone utilisé dans les systèmes selon l'invention peut être de tout type connu. Un microphone dit "à électret" est un exemple de microphone très performant qui peut être utilisé pour un radiotéléphone fonctionnant en "mains libres".

Bien entendu, l'invention n'est pas limitée aux modes de réalisation qui viennent d'être décrits et l'on pourra remplacer tout moyen par un moyen équivalent sans sortir du cadre de l'invention.

## Revendications

**1/** Système de fixation pour microphone (13), ledit système (10) comprenant un élément de support (12),
caractérisé en ce qu'il comprend un corps partiellement sphérique (11) capable d'effectuer un mouvement basculant à la manière d'une rotule par rapport audit élément de support (12) dont il est rendu solidaire, ledit microphone (13) étant solidaire dudit corps partiellement sphérique (11) de sorte que ledit microphone (13) est orientable par action sur ledit corps (11).

**2/** Système selon la revendication 1 caractérisé en ce que ledit microphone (13) est intégré dans ledit corps partiellement sphérique (11).

**3/** Système selon la revendication 2 caractérisé en ce que ledit corps (11) a la forme d'une sphère dont une portion a été retirée de manière à former un logement (15) pour ledit microphone (13).

**4/** Système selon l'une des revendications 2 ou 3 caractérisé en ce que la forme du logement (15) dudit microphone (13) dans ledit corps partiellement sphérique (11) est adaptée pour permettre un fonctionnement optimal du microphone, et notamment une transmission optimale du son.

**5/** Système selon l'une des revendications 1 à 4 caractérisé en ce qu'il est installé dans un véhicule mobile, ledit élément de support (42) étant à cet effet fixé à l'intérieur de l'habitacle (30) dudit véhicule.

**6/** Système selon la revendication 5 caractérisé en ce que ledit élément de support (42) est rendu solidaire du plafonnier (33) de l'habitacle (30) dudit véhicule par enclipsage (420).

**7/** Système selon la revendication 5 caractérisé en ce que ledit élément de support (12) peut être déplacé à l'intérieur de l'habitacle (30) dudit véhicule pour être installé de manière temporaire en n'importe quel endroit dans ledit habitacle (30).
